# DEMANDE DE BREVET EUROPEEN

(11) **EP 4 614 377 A1**
(43) Date de publication de la demande: **10.09.2025**
(21) Numéro de dépôt: 25161041.6
(22) Date de dépôt: 28.02.2025
(51) Int. Cl.: G06F 21/62, G06F 21/64, G06F 21/79, G06F 21/75, G06F 11/10

(54) **DEMARRAGE D'UNE MEMOIRE**

(30) Priorité: 08.03.2024 FR 2402336
(71) Demandeur: STMicroelectronics International N.V., 1228 Plan-les-Ouates, Geneva (CH)
(72) Inventeur: DOCQUIER, Guillaume, 4300 WAREMME (BE); PEETERS, Michael, 1320 TOURINNES-LA-GROSSE (BE)
(74) Mandataire: Cabinet Beaumont

(57) **Abrégé**

La présente description concerne un procédé de vérification d'écriture de données dans une mémoire comprenant les étapes successives suivantes :
- vérifier (404) si le dernier groupe de données écrit dans la mémoire comprend au moins une donnée sensible ;
- si ledit groupe comprend au moins une donnée sensible, effacer (406) un premier groupe de données dont au moins une adresse est indiquée dans au moins une première métadonnée d'une donnée dudit dernier groupe de données.

## Description

### Domaine technique

La présente description concerne de façon générale les systèmes et dispositifs électroniques, et plus particulièrement le stockage de données par des systèmes et dispositifs électroniques. La présente description se rapporte, plus précisément, à un procédé d'écriture de données en mémoire, et à un procédé de démarrage d'une mémoire associé.

### Technique antérieure

Il est très courant de stocker des données dans une mémoire d'un système ou d'un dispositif électronique. Lorsque ces données comprennent des données sensibles, comme des données secrètes, il est important de s'assurer que toutes les étapes liées au procédé d'écriture et d'effacement de données ont bien été effectuées.

Il serait souhaitable de pouvoir améliorer, au moins en partie, certains aspects des procédés de stockage de données en mémoire.

### Résumé de l'invention

Il existe un besoin pour des procédés d'écriture en mémoire plus sécurisée.

Il existe un besoin pour des procédés de démarrage d'une mémoire permettant de vérifier la bonne réalisation de la dernière opération d'écriture effectuée.

Il existe un besoin pour des procédés de stockage d'informations sensibles qui garantissent un effacement efficace de ces données.

Il existe un besoin pour des procédés de démarrage d'une mémoire permettant de détecter une attaque par coupure d'alimentation.

Il existe un besoin pour des dispositifs électroniques mettant en oeuvre de tels procédés.

Un mode de réalisation pallie tout ou partie des inconvénients des procédés d'écriture en mémoire connus.

Un mode de réalisation pallie tout ou partie des inconvénients des procédés de démarrage d'une mémoire connus.

Un mode de réalisation prévoit un procédé d'écriture d'un groupe de données en mémoire, dans lequel le dernier groupe de données écrit dans la mémoire ne comprend que des données non sensibles.

Un mode de réalisation prévoit un procédé de démarrage d'une mémoire dans lequel il est vérifié si le dernier groupe de données écrit en mémoire comprend au moins une donnée sensible.

Un mode de réalisation prévoit un procédé de démarrage d'une mémoire dans lequel si le dernier groupe de données écrit comprend une donnée sensible, une opération d'effacement de la dernière copie dudit groupe de données est mise en oeuvre.

Un mode de réalisation prévoit, en outre, après la mise en oeuvre d'une opération d'effacement pendant le procédé de démarrage, la mise en oeuvre d'une opération d'écriture d'un groupe de données ne comprenant que des données non sensibles de référence suivant le dernier groupe de données écrit.

Un mode de réalisation prévoit un procédé de vérification d'écriture de données dans une mémoire comprenant les étapes successives suivantes :
- vérifier si le dernier groupe de données écrit dans la mémoire comprend au moins une donnée sensible ;
- si ledit groupe comprend au moins une donnée sensible, effacer un premier groupe de données dont au moins une adresse est indiquée dans au moins une première métadonnée d'une donnée dudit dernier groupe de données.

Un autre mode de réalisation prévoit un dispositif électronique comprenant une mémoire, adaptée à mettre en oeuvre un procédé de vérification d'écriture de données de ladite mémoire comprenant les étapes successives suivantes :
- vérifier si le dernier groupe de données écrit dans la mémoire comprend au moins une donnée sensible ;
- si ledit groupe comprend au moins une donnée sensible, effacer un premier groupe de données dont au moins une adresse est indiquée dans au moins une première métadonnée d'une donnée dudit dernier groupe de données.

Selon un mode de réalisation, l'étape d'effacement est suivie d'une étape d'écriture d'un deuxième groupe de données ne comprenant que des données non sensibles de référence.

Selon un mode de réalisation, si ledit groupe ne comprend aucune donnée sensible, aucune étape d'effacement n'est mise en oeuvre.

Selon un mode de réalisation, ladite mémoire est une mémoire non volatile.

Selon un mode de réalisation, chaque donnée comprend une deuxième métadonnée indiquant si la donnée est sensible ou non sensible.

Selon un mode de réalisation, chaque donnée comprend une troisième métadonnée indiquant la validité de ladite donnée.

Selon un mode de réalisation, chaque donnée comprend une quatrième métadonnée indiquant si la donnée est une dernière donnée d'un groupe de données.

Selon un mode de réalisation, le procédé de vérification d'écriture de données dans ladite mémoire est mis en oeuvre au démarrage de ladite mémoire.

Selon un mode de réalisation, le procédé de vérification d'écriture de données dans ladite mémoire est mis en oeuvre avant une phase d'écriture de données dans ladite mémoire.

Selon un mode de réalisation, la mémoire est une mémoire non volatile.

Selon un mode de réalisation, à chaque écriture de groupes de données, le dernier groupe de données à être écrit ne comprend que des données non sensibles.

Un autre mode de réalisation prévoit un procédé de démarrage d'un dispositif électronique comprenant ladite mémoire comprenant le procédé de démarrage décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un dispositif électronique adapté à mettre en oeuvre les modes de mise en oeuvre décrits en relation avec les figures 2 à 4 ;
la figure 2 représente, sous forme de blocs, la structure d'une donnée à stocker en mémoire ;
la figure 3 représente un schéma-bloc illustrant un mode de mise en oeuvre d'un procédé d'écriture de données en mémoire ; et
la figure 4 représente un schéma-bloc illustrant un mode de mise en oeuvre d'un procédé de démarrage d'une mémoire.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent le stockage de données en mémoire, et plus particulièrement, un procédé d'écriture de données en mémoire permettant de détecter une attaque par coupure d'alimentation en énergie. Plus précisément, la présente description se rapporte à un mode de mise en oeuvre d'un procédé d'écriture de groupes de données en mémoire dans lequel le dernier groupe de données écrit en mémoire ne comprend que des données non sensibles, c'est-à-dire ne comprend aucune donnée sensible. La présente description concerne, en outre, un mode de mise en oeuvre d'un procédé de démarrage d'une mémoire dans lequel il est vérifié si le dernier groupes de données écrit en mémoire n'est composé exclusivement de données non sensibles, et y remédie, de façon optionnelle, si ce n'est pas le cas

De plus, les modes de réalisation décrits ci-après sont tout particulièrement adaptés à tout types d'application utilisant le stockage de données en mémoire, et en particulier le stockage de données sensibles et non sensibles en mémoire.

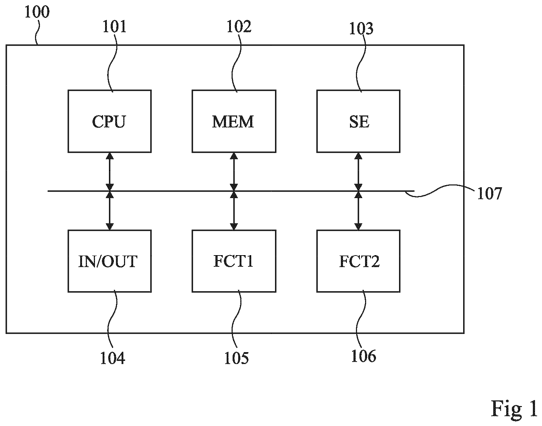

La figure 1 est un schéma bloc représentant, très schématiquement, une architecture d'un exemple d'un dispositif électronique 100 adapté à mettre en oeuvre un procédé de démarrage d'une mémoire.

Le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est a adapté à mettre en oeuvre un procédé de de démarrage d'une mémoire.

Le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 est adaptée à stocker différents types de données. Selon un mode de réalisation, le dispositif 100 comprend au moins une mémoire non volatile adaptée à stocker des données sensibles et des données non sensibles. Selon un mode de réalisation préféré, la mémoire 102 est une mémoire non volatile.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé de démarrage d'une mémoire.

Le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage.

Le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesure, des circuits de conversion de données, etc. Selon un mode de réalisation, les circuits 105 et 106 peuvent comprendre un circuit adapté à mettre en oeuvre un procédé de démarrage d'une mémoire.

Le dispositif électronique 100 comprend, en outre, un ou plusieurs bus de données 107 adaptés à transférer des données entre ses différents composants.

Selon un exemple particulier, le dispositif électronique 100 est adapté à mettre en oeuvre des programmes informatiques, et en particulier un programme informatique permettant de mettre en oeuvre un procédé de démarrage d'une mémoire.

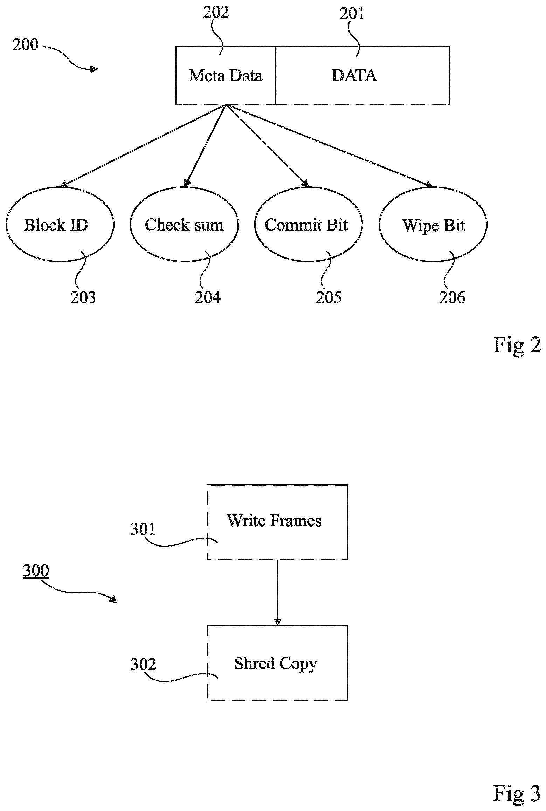

La figure 2 représente, très schématiquement et sous forme de blocs, une donnée 200 adaptée à être stockée dans une des mémoires 102 du dispositif 100 décrit en relation avec la figure 1. Plus particulièrement, la donnée 200 est adaptée à être stockée dans la mémoire non volatile du dispositif 100. Selon un mode de réalisation, la mémoire 102 est une mémoire non volatile.

Selon un mode de réalisation, la donnée 200 est composée de son contenu 201 (DATA) et de métadonnées 202 (Metadata) permettant de caractériser la donnée 200.

Le contenu 201 de la donnée 200 représente l'information effective que transporte la donnée 200.

Les métadonnées 202 comportent plusieurs métadonnées représentant chacune une caractéristique de la donnée 200. Selon un exemple, chaque métadonnée des métadonnées 202 est un ou plusieurs bits de donnée.

Selon un mode de réalisation, les métadonnées 202 comprennent une métadonnée d'identification 203 (Block ID) permettant à un gestionnaire de données de retrouver toutes les copies d'une même donnée écrite en mémoire. Autrement dit, toutes les copies d'une même donnée ont la même métadonnée d'adressage 203. Selon un mode de réalisation, la métadonnée d'adressage 203 permet, lors de l'écriture de la donnée 200 en mémoire, de lancer une opération d'effacement de la ou des copies précédentes de la donnée 200 déjà écrites en mémoire. D'autres utilisations de la métadonnée 203 sont à la portée de la personne du métier. Selon un exemple, la métadonnée 203 est un mot de plusieurs bits de donnée.

Selon un exemple, les métadonnées 202 comprennent une métadonnée de vérification d'écriture 204 (Checksum) qui indique si le contenu 201 de la donnée 200 a été écrit correctement. Autrement dit, la métadonnée 204 peut permettre de vérifier si l'opération d'écriture de la donnée 200 a eu lieu et/ou si elle a eu lieu correctement. Cette métadonnée 204 est toujours écrite en fin du procédé d'écriture en mémoire de la donnée 200. Selon un exemple, la métadonnée 204 est un mot de plusieurs bits de donnée. Selon un autre exemple, la métadonnée 204 est un seul bit de donnée.

Selon un exemple, les métadonnées 202 comprennent une métadonnée de fin d'écriture 205 (Commit Bit) indiquant si la donnée 200 est la dernière donnée d'un groupe de données en cours d'écriture. En effet, il est rare de n'écrire en mémoire qu'une seula donnée à la fois. Il est plus commun d'écrire des données par groupes dans une mémoire. Ainsi, si la métadonnée de fin d'écriture 205 indique la donnée 200 est la dernière donnée d'un groupe de données à écrire, cela signifie que toutes les autres données du groupe ont été écrites en mémoire. Selon un exemple, la métadonnée 205 est un seul bit de donnée.

Selon un mode de réalisation, les métadonnées 202 comprennent une métadonnée 206 (Wipe Bit) indiquant si la donnée 200 est une donnée sensible ou non sensible. On appelle ici "données sensibles" des données dont le contenu n'est pas destiné à être accessible au public. Selon un exemple, des données secrètes sont des données sensibles. Ainsi, si la métadonnée 206 indique que la donnée 200 est une donnée sensible, cela signifie que le contenu 201 de la donnée 200 comprend une ou plusieurs informations sensibles. A l'inverse, si la métadonnée 206 indique que la donnée 200 est une donnée non sensible, cela signifie que le contenu 201 de la donnée 200 ne comprend aucune information sensible. Selon un exemple, la métadonnée 206 est un seul bit de donnée.

Il est à noter que, selon un mode de réalisation, un groupe de données à écrire dans une mémoire peut comprendre des données sensibles et/ou des données non sensibles.

La figure 3 est un schéma-bloc illustrant un exemple de procédé d'écriture de groupes de données en mémoire 300.

Selon un mode de réalisation, le procédé 300 concerne l'écriture dans une mémoire, du type d'une mémoire 102 du dispositif 100 décrit en relation avec la figure 1, d'un ou plusieurs groupes de données du type de la donnée 200 décrite en relation avec la figure 2.

A une étape initiale 301 (Write Frames), toutes les données du ou des groupes de données à écrire sont écrites dans la mémoire. Selon un exemple, les données de chaque groupe de données sont écrites de manière séquentielle dans la mémoire, c'est-à-dire une à la fois, et l'une à la suite de l'autre.

A une étape 302 (Shred Copy), successive à l'étape 301, la dernière copie du groupe de données écrites dans la mémoire est effacée. Pour cela, les métadonnées d'adressage 203 des données sont utilisées. Autrement dit, les données désignées par les adresses des métadonnées d'adressage 203 des données du groupe de données sont toutes effacées. Selon un exemple, une étape d'effacement peut être une étape d'effacement, c'est-à-dire une étape de destruction de la donnée écrite, ou peut être une étape de réécriture d'une autre donnée sur la donnée déjà écrite.

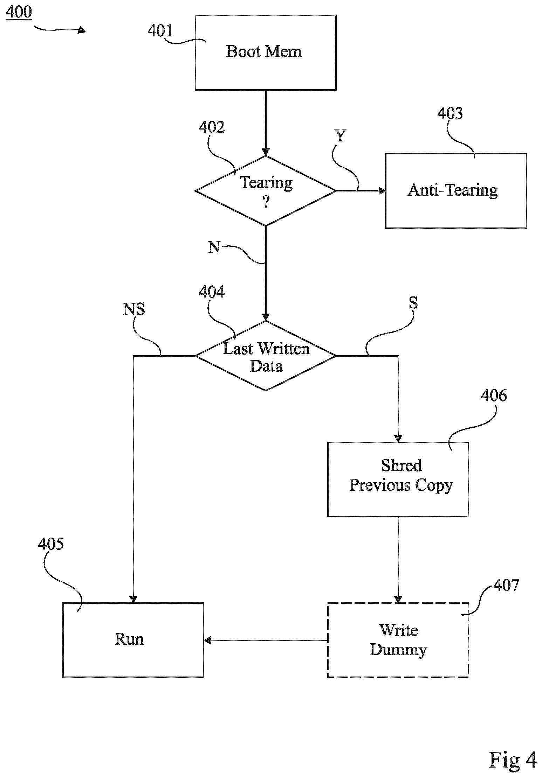

Un inconvénient de ce procédé d'écriture en mémoire est que si une attaque de type attaque par coupure d'alimentation est mise en oeuvre entre les étapes 301 et 302, il se peut que des anciennes copies de données sensibles ne soient pas supprimées correctement. Le procédé de démarrage décrit en relation avec la figure 4 permet de pallier cet inconvénient.

La figure 4 est un schéma-bloc illustrant un mode de mise en oeuvre d'un procédé 400 de démarrage d'une mémoire dans laquelle ont été écrites des groupes de données, du type de la donnée 200 décrite en relation avec la figure 2, en utilisant le procédé d'écriture en mémoire 300 décrit en relation avec la figure 3.

A une étape initiale 401 (Boot Mem), la mémoire est démarrée. Selon un mode de réalisation, cette mémoire est du type d'une des mémoires 102 décrites en relation avec la figure 1, par exemple une mémoire non volatile. Cette étape de démarrage peut faire partie d'un procédé de démarrage d'un dispositif comprenant la mémoire, comme le dispositif 100 de la figure 1.

A une étape 402 (Tearing ?), successive à l'étape 401, la mémoire, ou un circuit annexe, peut mettre en oeuvre une vérification du dernier groupe de données écrit dans la mémoire pour vérifier si cette dernière étape d'écriture a été effectuée en entier et/ou correctement. Cette étape 402 permet de vérifier si l'étape 301 de la figure 3 a été effectuée correctement ou non. Pour cela, une métadonnée du type de la métadonnée 204 de la dernière donnée écrite peut être vérifiée. Si cette vérification indique un problème (sortie Y du bloc 402), une étape 403 (Anti-tearing) est mise en oeuvre, sinon (sortie N du bloc, une étape 404 (Last Written Data) est mise en oeuvre.

A l'étape 403, il a été détecté que la dernière opération d'écriture n'a pas pu se dérouler en entier et/ou correctement. Une opération de réécriture et/ou de récupération de données peuvent être mise en oeuvre. De telles opérations sont à la portée de la personne du métier. Cette étape peut soit annuler la suite du procédé de démarrage, ou peut être suivie par l'étape 406 décrite ci-après.

A l'étape 404 (Last Written Data ?), successive à l'étape 402, il a été vérifié que les dernières données écrites en mémoire ont été écrite correctement et/ou en entier. Il est à présent vérifié si le dernier groupe de données écrit dans la mémoire comprend ou non des données sensibles. On appelle ici dernier groupe écrit dans la mémoire, le dernier groupe de données qui a été écrit dans la mémoire avant son arrêt. Autrement dit, le dernier groupe de données écrit dans la mémoire est le groupe de données pour lequel l'opération d'écriture est la plus récente. Ce dernier groupe peut être indiqué par la valeur d'une métadonnée du type de la métadonnée 205 décrite en relation avec la figure 2, ou être indiqué par sa place dans la mémoire.

Si le dernier groupe de données écrit ne comprend que des données non sensibles (sortie NS du bloc 404), l'étape suivante est une étape 405 (Run). Si le dernier groupe de données écrit comprend au moins une donnée sensible (sortie S du bloc 404), l'étape suivante est une étape 406 (Shred Previous Copy).

A l'étape 405, le dernier groupe de données écrit dans la mémoire ne comprend que des données non sensibles, cela indique que la dernière opération d'écriture d'un groupe de données a été réalisée sans encombre. La mémoire peut donc être utilisée, sans réaliser d'autres opérations, et, en particulier sans réaliser d'autres opérations d'effacement au préalable.

A l'étape 406, le dernier groupe de données écrit dans la mémoire comprend au moins une donnée sensible, cela indique qu'il y a un risque que la dernière opération d'écriture de groupes de données en mémoire ait été arrêtée avant d'être terminée. Cela indiquerait donc que l'opération d'effacement de la dernière copie des groupes de données écrit récemment n'a peut-être pas été effectuée. Ainsi, le cas échéant, une opération d'effacement du type de l'opération 302 est mise en oeuvre. Autrement dit, la dernière copie d'au moins le dernier groupe de données écrites dans la mémoire est effacée, en utilisant pour cela les métadonnées d'adressage 203 des données du groupe. Dit encore autrement, les données désignées par les adresses des métadonnées des données du dernier groupe de données écrit sont toutes effacées.

A une étape optionnelle 407 (Write Dummy), successive à l'étape 406, un groupe de données ne comprenant que des données non sensibles de référence est écrit après le dernier groupe de données écrit avant l'arrêt de la mémoire. Cela permet d'éviter une nouvelle opération d'effacement si la mémoire est arrêtée de nouveau sans qu'aucune autre donnée n'ait été écrite à la suite de la donnée testée à l'étape 404.

L'étape suivant l'étape 407 est l'étape 405. Si l'étape 407 n'a pas lieu, c'est l'étape 406 qui est suivie de l'étape 405.

Un avantage de ce mode de réalisation est qu'il permet de détecter qu'une opération d'écriture a été arrêtée avant d'être terminée. Plus particulièrement, ce procédé de démarrage permet de détecter des attaques de type attaque par coupure d'alimentation, qui pourrait permettre, dans le cas présent, d'avoir accès à des anciennes copies de données sensibles qui n'ont pas encore été effacées.

Un autre avantage de ce mode de réalisation est qu'il permet de garantir l'effacement d'anciennes copies de données sensible même après une coupure d'alimentation.

Comme dit précédemment, le procédé de démarrage de la mémoire peut être intégré dans un procédé de démarrage d'un dispositif électronique comprenant ladite mémoire.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Selon un exemple, l'étape de vérification 404 du procédé 400 peut comprendre, en outre, une vérification de la métadonnée de vérification 204 de la dernière donnée écrite dans la mémoire.

De plus, il est à noter que le procédé de démarrage peut aussi être mis en oeuvre, non pas au moment du démarrage de la mémoire, mais avant une phase d'écriture de données en mémoire. Dans ce cas, on parle plutôt d'un procédé de vérification d'écriture.

Enfin, la mise en oeuvre pratique des modes de réalisation et variantes décrits est à la portée de la personne du métier à partir des indications fonctionnelles données ci-dessus.

## Revendications

1. Procédé de vérification d'écriture de données dans une mémoire (102) comprenant les étapes successives suivantes :
- vérifier (404) si le dernier groupe de données (200) écrit dans la mémoire (102) comprend au moins une donnée sensible ;
- si ledit groupe comprend au moins une donnée sensible, effacer (406) un premier groupe de données dont au moins une adresse est indiquée dans au moins une première métadonnée (203) d'une donnée (200) dudit dernier groupe de données.

2. Dispositif électronique (100) comprenant une mémoire (102), adaptée à mettre en oeuvre un procédé de vérification d'écriture de données de ladite mémoire (102) comprenant les étapes successives suivantes :
- vérifier (404) si le dernier groupe de données (200) écrit dans la mémoire (102) comprend au moins une donnée sensible ;
- si ledit groupe comprend au moins une donnée sensible, effacer (406) un premier groupe de données dont au moins une adresse est indiquée dans au moins une première métadonnée (203) d'une donnée (200) dudit dernier groupe de données.

3. Procédé selon la revendication 1, ou dispositif selon la revendication 2, dans lequel l'étape d'effacement (406) est suivie d'une étape d'écriture (407) d'un deuxième groupe de données ne comprenant que des données non sensibles de référence.

4. Procédé selon la revendication 1 ou 3, ou dispositif selon la revendication 2 ou 3, dans lequel si ledit groupe ne comprend aucune donnée sensible, aucune étape d'effacement n'est mise en oeuvre.

5. Procédé selon l'une quelconque des revendications 1, 3 ou 4, ou dispositif selon l'une quelconque des revendications 2 à 4, dans lequel ladite mémoire (102) est une mémoire non volatile.

6. Procédé selon l'une quelconque des revendications 1, 3 à 5, ou dispositif selon l'une quelconque des revendications 2 à 5, dans lequel chaque donnée (200) comprend une deuxième métadonnée (206) indiquant si la donnée est sensible ou non sensible.

7. Procédé selon l'une quelconque des revendications 1, 3 à 6, ou dispositif selon l'une quelconque des revendications 2 à 6, dans lequel chaque donnée (200) comprend une troisième métadonnée (204) indiquant la validité de ladite donnée (200).

8. Procédé selon l'une quelconque des revendications 1, 3 à 7, ou dispositif selon l'une quelconque des revendications 2 à 7, dans lequel chaque donnée (200) comprend une quatrième métadonnée (205) indiquant si la donnée (200) est une dernière donnée d'un groupe de données.

9. Procédé selon l'une quelconque des revendications 1, 3 à 8, ou dispositif selon l'une quelconque des revendications 2 à 8, dans lequel le procédé de vérification d'écriture de données dans ladite mémoire est mis en oeuvre au démarrage de ladite mémoire.

10. Procédé selon l'une quelconque des revendications 1, 3 à 8, ou dispositif selon l'une quelconque des revendications 2 à 8, dans lequel le procédé de vérification d'écriture de données dans ladite mémoire est mis en oeuvre avant une phase d'écriture de données dans ladite mémoire.

11. Procédé selon l'une quelconque des revendications 1, 3 à 10, ou dispositif selon l'une quelconque des revendications 2 à 10, dans lequel la mémoire est une mémoire non volatile.

12. Procédé d'écriture (300) dans une mémoire (102), comprenant le procédé de vérification d'écriture selon l'une quelconque des revendications 1, 3 à 11, dans lequel à chaque écriture de groupes de données, le dernier groupe de données à être écrit ne comprend que des données non sensibles.

13. Procédé de démarrage d'un dispositif électronique (100) comprenant une mémoire (102) comprenant le procédé de vérification d'écriture selon l'une quelconque des revendications 1, 3 à 11.
